# EUROPEAN PATENT APPLICATION

(11) **EP 4 501 678 A1**
(43) Date of publication of application: **05.02.2025**
(21) Application number: 23778142.2
(22) Date of filing: 27.03.2023
(51) Int. Cl.: B60K 11/08, B60R 19/52, F01P 7/02

(54) **ACTIVE GRILLE SHUTTER AND VEHICLE**

(30) Priority: 28.03.2022 CN 202210314758
(71) Applicant: Wuhan Lotus Cars Co., Ltd., Wuhan, Hubei 430056 (CN)
(72) Inventor: HU, Chao, Wuhan, Hubei 430056 (CN); ZHOU, Jiancao, Wuhan, Hubei 430056 (CN); WEI, Qunxiong, Wuhan, Hubei 430056 (CN); ZHENG, Mingmin, Wuhan, Hubei 430056 (CN); HE, Shichao, Wuhan, Hubei 430056 (CN); WANG, Yanhong, Wuhan, Hubei 430056 (CN)
(74) Representative: Zaboliene, Reda
(86) International application number: PCT/CN2023/084210
(87) International publication number: WO 2023/185777

(57) **Abstract**

An active grille shutter and a vehicle. The active grille shutter comprises: a fixed support (1), linkage supports (2), driving devices (3), first connecting rod mechanisms (4), and at least one air inlet unit (10); the air inlet unit (10) comprises a plurality of blades (6) and a plurality of blade connecting rod mechanisms (7); the linkage supports (2) are rotatably connected to a first end of each of the plurality of blade connecting rod mechanisms (7), and a second end of each blade connecting rod mechanism (7) is rotatably connected to a first end of each blade (6) in a one-to-one correspondence mode; a second end of each blade (6) is rotatably connected to the fixed support (1); a first end of each first connecting rod mechanism (4) is connected to each linkage support (2); a second end of each first connecting rod mechanism (4) is connected to each driving device (3); the driving devices (3) drive the first connecting rod mechanisms (4) to move, the first connecting rod mechanisms (4) drive the linkage supports (2) to move, the linkage supports (2) drive the blade connecting rod mechanisms (7) to move, and the blade connecting rod mechanisms (7) drive the first ends of the blades (6) to rotate, so as to open or close the air inlet unit (10). The active grille shutter has the advantages that the effective air inlet area is large, and the heat dissipation efficiency can be improved.

## Description

The present document claims priority to a Chinese patent application number 202210314758.7, filed on March 28, 2022, submitted by Wuhan Lotus Automotive Co., Ltd. and entitled "An Active Air Intake Grille and Vehicle". The full disclosure of the above-identified application is incorporated by reference into the second embodiment of this document, and the order of some of the drawings has been amended.

### TECHNICAL FIELD

The present document relates to automobile engines, and in particular to an active air intake grille and a vehicle.

### DESCRIPTION OF RELATED ART

Active grille technology is an emerging fuel-saving and emission-reduction technology in the automotive field. It can adjust the air flow from the outside into the engine compartment according to the cooling requirements of the engine, reducing the resistance of redundant air in the internal flow field, and improving the economy of the vehicle. Furthermore, the grille also has the function of improving the appearance of the vehicle and protecting debris from entering the engine compartment.

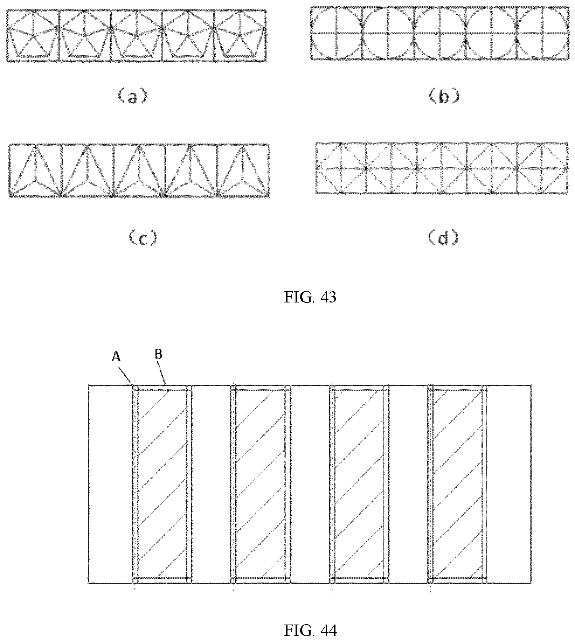

Currently, the active air intake grilles in the market are classified as hidden type and exposed type. The current exposed grille is mainly the straight waterfall type, which is opened by turning each straight waterfall blade B inwardly around the rotation axis A to open the air intake, or is turned from inward to outward to close the air intake, please refer to FIG. 44.

### SUMMARY

The present document provides an active air intake grille and a vehicle.

The active air intake grille of the present document includes a fixed bracket, a link bracket, a driving device, a first link mechanism and at least one air intake unit;
The air intake unit includes a plurality of blades and a plurality of blade link mechanisms;
The link bracket is rotatably connected to a first end of each of the plurality of blade link mechanisms, and a second end of each of the plurality of blade link mechanisms is rotatably connected to the first end of each of the plurality of blades respectively; the second end of each of the plurality of blades is rotatably connected to the fixed bracket;
A first end of the first link mechanism is connected to the link bracket and a second end of the first link mechanism is connected to the driving device;
The driving device drives the first link mechanism to move, the first link mechanism drives the link bracket to move, the link bracket drives the blade link mechanism to move, and the blade link mechanism drives the first ends of the blades to rotate to open or close the air intake unit.

In one embodiment, the fixed bracket is provided with a plurality of air intake unit mounting ports, and the air intake unit mounting ports correspond to the at least one air intake unit, respectively;
The shape of the air intake unit mounting port includes at least one of a circular shape and a polygonal shape, and the plurality of blades are arranged along a circumferential edge of the air intake unit mounting port.

In one embodiment, the fixed bracket is provided with a redundant blade mounting port, and the redundant blade mounting port is located between adjacent air intake unit mounting ports, and a blade is provided in the redundant blade mounting port.

In one embodiment, it includes a fixed bracket, a link bracket, a driving device, a first link mechanism and at least one air intake unit;
The fixed bracket is provided with a plurality of air intake unit mounting ports, and the air intake unit mounting ports correspond to the at least one air intake unit, respectively; the air intake unit includes a plurality of blades and a plurality of blade link mechanisms, the blade is provided with a first end and a second end, the second end of the blade is rotatably connected to an edge of the air intake unit mounting port to realize a rotatable connection between the blade and the fixed bracket, the first end of each blade is away from the edge of the air intake unit mounting port relative to its second end, and is rotatably connected to the blade link mechanism respectively; one end of each blade link mechanism is rotatably connected to each blade, and the other end of each blade link mechanism is rotatably connected to the link bracket; the first link mechanism is respectively connected to the link bracket and the driving device at different positions thereof, the first link mechanism is configured to be driven by the driving device and drive the link bracket to move, so that the blade link mechanism is driven by the link bracket, and the blade link mechanism drives the blade to rotate, and the blade flips relative to the fixed bracket to open or close the air intake unit.

In one embodiment, the air intake unit is configured as, when the air intake unit is in an open state, a plurality of air intake channels are formed on the active air intake grille between the blades of the same air intake unit; the air intake channels are configured as air is capable of passing through them and into the active air intake grille; when the air intake unit is in a closed state, the air intake channels disappear;
The blades in the same air intake unit are configured as, the link bracket moves in a direction away from the air intake unit mounting port, and the air intake channels are formed between the blades; after the formation of the air intake channels, the link bracket is reset in a direction close to the air intake unit mounting port, and the air intake channels disappear.

In one embodiment, the blade link mechanism is rotatably connected to the blade and is clamped with the blade, and the blade link mechanism is rotatably connected to the link bracket and is clamped with the link bracket.

In one embodiment, the blade link mechanism includes a main body and a first matching portion, the main body is provided with a first base area, the first base area the first matching portion are connected and the first matching portion is arranged on the first base area, the first matching portion includes a first shaft portion and a clamping group which are arranged from a position close to toward a position far from the main body, the clamping group includes a first clamping portion and a second clamping portion, the first clamping portion and the second clamping portion are arranged at intervals, the first clamping portion and the second clamping portion are both connected to the first shaft portion, and the first clamping portion and the second clamping portion are elastically deformable; the blade is provided with a second matching portion, the clamping group is clasped with the second matching portion, and the first shaft portion is rotatably connected to the second matching portion; the second matching portion is located between the clamping group and the main body, and the clamping group and the first base area are configured to cooperate with each other to restrict at least a part of the second matching portion therebetween, thereby limiting the separation of the blade link mechanism from the blade.

In one embodiment, a third matching portion is further included, and the main body is provided with a second base area, the second base area and the third matching portion are connected and the third matching portion is provided on the second base area, the third matching portion includes a second shaft portion and a third clamping portion arranged at intervals, the link bracket is provided with a fourth matching portion, the second shaft portion is rotatably connected to the fourth matching portion, and the third clamping portion is clamped with the fourth matching portion.

In one embodiment, the blade link mechanism further includes an elastic portion, the elastic portion is connected to the main body and abuts against the link bracket to play a buffering role when the blade link mechanism and the link bracket move relative to each other; the elastic portion is provided with at least one penetration area, and the penetration area is used to facilitate the deformation of a peripheral portion of the elastic portion that surrounds the penetration area.

In one embodiment, the number of the penetration areas is more than two, and different penetration areas are used to facilitate deformation of different positions of the elastic portion. The different positions of the elastic portion are used to play a buffering role at different moments of movement of the blade link mechanism and the link bracket.

In one embodiment, it further includes a second link mechanism. The first link mechanism is located at a lower side of the link bracket and is connected to the link bracket, and the second link mechanism is connected to an upper end of the fixed bracket, a lower end of the fixed bracket, an upper end of the link bracket and a lower end of the link bracket; the first link mechanism is configured to be driven by the driving device and drive the link bracket to move forward or backward of the vehicle, so that the blade flips relative to the fixed bracket toward outside or inside of the vehicle to open or close the air intake unit.

In one embodiment, the second link mechanism includes a first separate body and a second separate body rotatably connected with each other, one of the first separate body and the second separate body is rotatably connected to the fixed bracket, and the other of the first separate body and the second separate body is rotatably connected to the link bracket.

In one embodiment, one of the first separate body and the second separate body is provided with a shaft portion, and the other of the first separate body and the second separate body is provided with a rotating connection portion, and the rotating connection portion is rotatably connected to the shaft portion.

In one embodiment, the rotating connection portion is a sleeve portion with a side opening integrally formed on one of the first separate body and the second separate body, and the shaft portion is a cylinder integrally formed on the other of the first separate body and the second separate body.

In one embodiment, the first separate body and the second separate body are both U-shaped, and the U-shaped first separate body is rotatably connected to one of the link bracket and the fixed bracket at one end of its opening, and is rotatably connected to the other of the link bracket and the fixed bracket at the other end of its opening.

In one embodiment, an operation logic of the driving device includes detecting a resistance it is subjected to; the second separate body is provided with a force distribution part protruding outward from the second separate body relative to its peripheral portion, and the force distribution part is arranged on a rotation trajectory of the first separate body, and the force distribution part hinders the rotation of the first separate body and is used to generate an interaction force with the first separate body; the force applied by the first separate body to the force distribution part is used to be transmitted to the driving device as part of the resistance.

The present document further provides a vehicle, which includes an active air intake grille as described in any of the above items.

The active air intake grille provided in the present document has the advantages of a large effective air intake area and can improve the heat dissipation efficiency.

### BRIEF DESCRIPTION OF THE DRAWINGS

FIG. 1 is a three-dimensional diagram of a first angle of an active air intake grille according to a first embodiment of the present document.
FIG. 2 is a three-dimensional diagram of a second angle of the active air intake grille according to the first embodiment of the present document.
FIG. 3 is an exploded diagram of the active air intake grille according to the first embodiment of the present document.
FIG. 4 is a first schematic diagram of an assembly of a first link mechanism and a driving shaft according to the first embodiment of the present document.
FIG. 5 is a second schematic diagram of the assembly of the first link mechanism and the driving shaft according to the first embodiment of the present document.
FIG. 6 is a schematic diagram of an assembly of the first link mechanism, the driving shaft and a driving device according to the first embodiment of the present document.
FIG. 7 is a schematic diagram of each support arm of the first link mechanism according to the first embodiment of the present document.
FIG. 8 is a schematic diagram showing movement trends of different parts of the first link mechanism according to the first embodiment of the present document after being driven by the driving shaft.
FIG. 9 is a schematic diagram of two first link mechanisms corresponding to open and closed states of an air intake unit according to the first embodiment of the present document.
FIG. 10 is a schematic diagram of connection points between the first link mechanism and an inner frame according to the first embodiment of the present document.
FIG. 11 is a first schematic diagram of connection points between the first link mechanism and a link bracket according to the first embodiment of the present document.
FIG. 12 is a second schematic diagram of the connection points between the first link mechanism and the link bracket according to the first embodiment of the present document.
FIG. 13 is a schematic diagram of a possible structure of the first link mechanism according to an embodiment of the present document.
FIG. 14 is a simplified motion diagram showing an expected motion stroke of the first link mechanism of FIG. 13.
FIG. 15 is a schematic diagram of another possible structure of the first link mechanism according to an embodiment of the present document.
FIG. 16 is a simplified motion diagram showing an expected motion stroke of the first link mechanism of FIG. 15.
FIG. 17 is a schematic diagram showing a comparison of a closed air intake unit and an open air intake unit according to the first embodiment of the present document.
FIG. 18 is a schematic diagram of a blade link mechanism according to the first embodiment of the present document.
FIG. 19 is a schematic diagram showing a comparison of the postures of the blade link mechanisms according to the first embodiment of the present document when the air intake unit is in the open state and closed state.
FIG. 20 is a schematic structural diagram showing the blade link mechanism and the blade according to the first embodiment of the present document.
FIG. 21 is a schematic diagram of a partial structure of the active air intake grille according to the first embodiment of the present document.
FIG. 22 is a schematic diagram of another possible structure of the blade link mechanism according to the first embodiment of the present document.
FIG. 23 is a schematic diagram of a further possible structure of the blade link mechanism according to the first embodiment of the present document.
FIG. 24 is a schematic diagram of a possible cooperation of the blade link mechanism and the link bracket according to the first embodiment of the present document.
FIG. 25 is a schematic diagram showing a comparison of a second link mechanism according to the first embodiment of the present document when a corresponding air intake unit is in open and closed states.
FIG. 26 is a schematic diagram showing a comparison of a first separate body and a second separate body before and after their assembly according to the first embodiment of the present document.
FIG. 27 is a schematic diagram showing a comparison of the postures of the second link mechanisms according to the first embodiment of the present document when the air intake unit is in the open and closed states.
FIG. 28 is a schematic diagram of a possible structure of the second link mechanism according to an embodiment of the present document.
FIG. 29 is a simplified motion diagram showing an expected motion stroke of the second link mechanism of FIG. 28.
FIG. 30 is a schematic diagram of another possible structure of the second link mechanism according to an embodiment of the present document.
FIG. 31 is a simplified motion diagram showing an expected motion stroke of the second link mechanism shown in FIG. 30.
FIG. 32 is a schematic diagram of a further possible structure the second link mechanism according to an embodiment of the present document.
FIG. 33 is a simplified motion diagram showing an expected motion stroke of the second link mechanism shown in FIG. 32.
FIG. 34 is a schematic diagram of the structure of the active air intake grille according to a second embodiment of the present document.
FIG. 35 is a schematic diagram of another structure of the active air intake grille according to the second embodiment of the present document.
FIG. 36 is a schematic diagram of an air intake unit according to the second embodiment of the present document.
FIG. 37 is a schematic diagram of a partial structure of the air intake unit according to the second embodiment of the present document.
FIG. 38 is a schematic diagram of the blades in an open state of the air intake unit according to the second embodiment of the present document.
FIG. 39 is a schematic diagram of the blades in a closed state of the air intake unit according to the second embodiment of the present document.
FIG. 40 is a schematic diagram showing partial structures of the active air intake grille according to the second embodiment of the present document.
FIG. 41 is a schematic diagram showing partial structures of the active air intake grille according to the second embodiment of the present document.
FIG. 42 is a schematic diagram showing partial structures of the active air intake grille according to the second embodiment of the present document.
FIG. 43 is a schematic diagram of the air intake grilles of air intake units of different shapes according to different embodiments of the present document.
FIG. 44 is a schematic diagram of an air intake grille according to the related art.
FIG. 45 is a schematic diagram of a clamping portion and a clamping hole according to the related art before and after their cooperation.
FIG. 46 is a schematic diagram of a mobile structure according to the related art.

Among them, the reference numerals in the figure correspond to:
A-rotation axis, B-straight waterfall blade, C-clamping portion, D-clamping hole, E-solid part, F-telescopic rod, G-motor assembly, α-intake channel;
1-fixed bracket, 1a-outer frame, 1b-inner frame, 2-link bracket, 2a-matching opening, 2b-fourth matching portion, 3-driving device, 4-first link mechanism, 41-driving shaft, 42-main rod body, 43-support arm;
5-second link mechanism, 51-first separate body, 52-second separate body, 53-shaft portion, 54-rotating connection portion, 55-force distribution part;
6-blade, 61-second matching portion; 7-blade link mechanism, 71-main body, 711-first base area, 712-second base area, 72-first matching portion, 721-first shaft portion, 722-clamping group, 7221-first clamping portion, 7222-second clamping portion, 73-third matching portion, 731-second shaft portion, 732-third clamping portion, 74-elastic portion, 741-penetration area;
8-flip axis, 9- connection point, 10- air intake unit, 11- first air intake portion, 12- second air intake portion, 22- redundant blade mounting port, 23- support bracket.

### DETAILED DESCRIPTION OF THE EMBODIMENTS

Specific implementations of the present document are described below in conjunction with the drawings and embodiments. The following embodiments are used to illustrate but not intend to limit the scope of the present document.

The terms "first", "second", "third", "fourth" and the like in the description and claims of the present document are used to distinguish similar objects and are not necessarily used to describe a particular order or sequence.

In the description of the present document, unless clearly stipulated and limited, the terms "set", "install", "couple", "connect", etc. should be understood in a broad sense. For example, it can be a fixed connection, a detachable connection, or an integral connection; it can be a mechanical connection or an electrical connection; it can be directly connected or indirectly connected through an intermediate medium. For those of ordinary skill in the art, the specific meanings of the above terms can be understood according to specific circumstances.

The terms "upper", "lower", "left", "right", "front", "back", "top", "bottom", "inside" and "outside" in the present document indicate directions or positional relationships based on the directions or positional relationships shown in the accompanying drawings, or indicate directions or positional relationships in which the products of the present document are usually placed when in use. They are only for the convenience and simplicity of description, and do not indicate or imply that the devices or elements must have a specific direction, be constructed and operated in a specific direction, and therefore should not be understood as a limitation of the present document.

The terms "includes", "including," or any other variations thereof in the present document are intended to cover a non-exclusive inclusion, and may include other elements not expressly listed in addition to the elements listed.

In the description of the present document, reference terms such as "one embodiment", "some embodiments", "illustratively", "specific embodiment", "further", "more detailed description", "preferably", "further provided with", "also including", "optionally" or "some examples" mean that the specific features, structures, materials or characteristics described in combination with the embodiment or example are included in at least one embodiment or example of the present document. In the present document, the exemplary expressions of the above terms do not necessarily refer to the same embodiment or example. Furthermore, the specific features, structures, materials, or characteristics described may be combined in any suitable manner in any one or more embodiments or examples. Furthermore, those of ordinary skill in the art may combine and associate different embodiments or examples and features of different embodiments or examples described in this document without contradiction.

Technical solutions in the embodiments of the present document will be clearly and completely described below in conjunction with the drawings in the embodiments of the present document. Obviously, the described embodiments are only part rather than all of the embodiments of the present document. Based on the embodiments of the present document, all other embodiments obtained by person of ordinary skill in the art without making any creative work shall fall within the protection scope of the present document.

It should be noted that in the description of the present document, it should be understood that the orientation or positional relationship indicated by the term "end" etc. is based on the orientation or positional relationship shown in the accompanying drawings, and is only for the convenience of describing the present document and simplifying the description, rather than indicating or implying that the component must have a specific orientation, be constructed and operated in a specific orientation, and therefore should not be understood as a limitation of the present document.

### The first embodiment

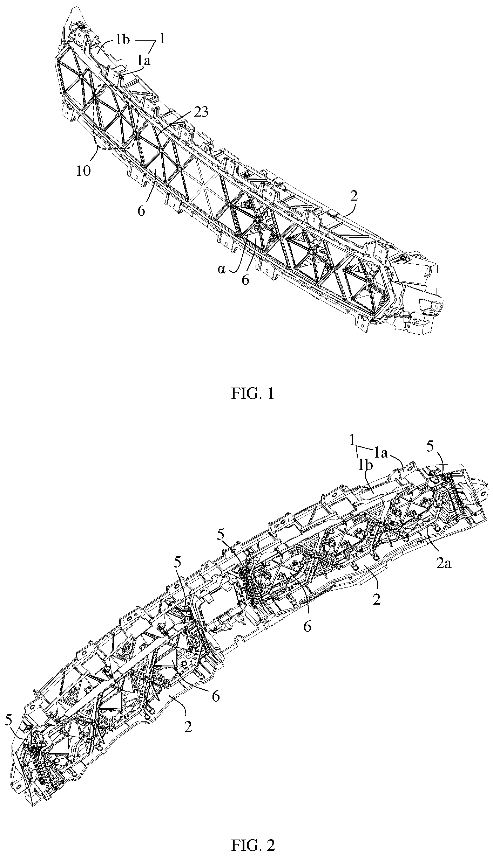

As shown in FIGS.1 to 3, the present document provides a vehicle, which is provided with an active air intake grille. The active air intake grille includes a fixed bracket 1, a link bracket 2, a driving device 3, a first link mechanism 4 and at least one air intake unit 10. The fixed bracket 1 is provided with at least one air intake unit mounting port, and the at least one air intake unit mounting port corresponds to the at least one air intake unit 10 in one-to-one manner. In this embodiment, the air intake unit 10 includes a plurality of blades 6 and a plurality of blade link mechanisms 7. The blade 6 has a first end and a second end. The second ends of the blades 6 are rotatably connected to edges of the air intake unit mounting port. The first ends of the blades 6 are away from the edges of the air intake unit mounting port relative to the second ends of the blades 6, and are rotatably connected to the blade link mechanisms 7 in a one-to-one manner. In addition to each blade link mechanism 7 having one end being rotatably connected to the corresponding blade 6, each blade link mechanism 7 also has one end being rotatably connected to the link bracket 2.

The first link mechanism 4 in this embodiment is connected to the link bracket 2 and the driving device 3 at different positions thereof. The first link mechanism 4 is configured to be driven by the driving device 3 and to drive the link bracket 2 to move, so that the blade link mechanism 7 is driven by the link bracket 2, and the blade link mechanism 7 further drives the blade 6 to rotate, making the blade 6 rotated relative to the fixed bracket 1 to open or close the air intake unit 10. It should be noted that the "open" or "opened" state of the air intake unit 10 mentioned above and in the whole document refer to the blade 6 being rotated inwardly at any angle. That is to say, all the descriptions related to "open" or "opened" state of the air intake unit 10 mentioned above and in the whole document do not specifically refer to the air intake unit 10 being opened to the maximum angle.

To summarize, since the second end of blade 6 is rotatably connected to the edge of the air intake unit mounting port, the first end of blade 6 is away from the edge of the air intake unit mounting port relative to the second end of blade 6, and the first end of blade 6 is rotatably connected to the blade link mechanism 7, the blade 6 may rotate relative to the fixed bracket 1 under the drive of the blade link mechanism 7 to open or close the air intake unit 10. Therefore, in the process of opening the air intake unit 10 in this embodiment to a certain extent from a closed state, the air will inevitably enter the active air intake grille through gaps formed between the blades 6. Meanwhile, since the first end of blade 6 is away from the edge of the air intake unit mounting port relative to the second end of blade 6, when the air enters the active air intake grille in this embodiment, there will not be a considerable deviation in the direction of travel, as compared to the traditional active air intake grille that uses straight waterfall blades B.

More concretely, as shown in FIG. 44, due to regulations requires the exposed grille cannot open outwardly, that is, cannot flip toward the outside of the vehicle, the straight waterfall blade B can only flip in one direction, that is, toward the inside of the vehicle, to open the air inlet. In other words, the straight waterfall blade B can only be opened toward one direction. Based on the design that the straight waterfall blade B can only be opened toward one direction, it is obvious that at most of the opening angles of the straight waterfall blade B, during the opening process of the straight waterfall blade B, a considerable portion of the air that enters the vehicle from outside through the air inlet has a travel direction that deviates from the driving direction of the vehicle, which will undoubtedly have a negative impact on the effective air intake area of the grille, thereby affecting the heat dissipation efficiency. Correspondingly, as described above, the air intake grille in the present document will not produce such problems. Based on this, the active air intake grille provided in this embodiment has a large effective air intake area and can improve the heat dissipation efficiency.

The following is a more detailed exemplary arrangement of the aforementioned active air intake grille.

As shown in FIGS. 1 and 2, six hexagonal air intake unit mounting ports are arranged in sequence on the fixed bracket 1, and six hexagonal air intake units 10 are mounted to the six air intake unit mounting ports one by one. Each of the air intake units 10 includes six triangular blades 6. For the convenience of illustration, the three air intake units 10 located on the right side of the vehicle are set in the closed state, and the three air intake units 10 located on the left side of the vehicle are set to be flipped at a certain angle toward the rear of the vehicle relative to the fixed bracket 1, that is, these three air intake units 10 are in the open state.

Illustratively, the fixed bracket 1 includes an outer frame 1a and an inner frame 1b that are arranged in sequence from the front to the rear of the vehicle. The outer frame 1a is located on the front side of the link bracket 2, and six hexagonal through-holes are respectively provided on the outer frame 1a and the inner frame 1b to form the air intake unit mounting ports. A radial support bracket 23 is provided across each through-hole of the outer frame 1a to ensure the overall strength of the air intake unit mounting port.

Please continue to refer to FIG. 1 and FIG. 2, two rectangular link brackets 2 are provided in the active air intake grille. One of the two link brackets 2 is located behind the three air intake units 10 on the left side of the vehicle, and the other is located behind the three air intake units 10 on the right side of the vehicle. Illustratively, the air intake unit 10 is configured in a manner that, when the air intake unit 10 is in an open state, a plurality of air intake channels α are formed between the blades 6 of the air intake unit 10 on the active air intake grille, and the air intake channels α will continue to expand as the blades 6 flip toward the interior of the vehicle until the blades 6 rotate to the maximum angle; the air intake channels α are configured so that air can pass through it into the active air intake grille; when the air intake unit 10 is in a closed state, the air intake channels α disappear; the blades 6 in the air intake unit 10 are configured as, when the link bracket 2 moves in a direction away from the air intake unit mounting port, the air intake unit 10 is opened, and the air intake channels α are formed between the blades 6; after the formation of the air intake channels α, the link bracket 2 is reset in a direction close to the air intake unit mounting port, and the air intake channels α disappear; that is, in the process of the link bracket 2 moving in a direction close to the air intake unit mounting port, the air intake channels α will continue to decrease, and finally disappear when the blades 6 are reset to their original positons. It should be noted that the direction away from the air intake unit mounting port is substantially along front to back direction, and the direction close to the air intake unit mounting port substantially along back to front direction.

Illustratively, the link bracket 2 is further provided with a plurality of matching ports 2a corresponding to the air intake units 10, respectively. The matching ports 2a extend through the link bracket 2 and are configured to communicate with the air intake channels α, so that when the air intake unit 10 is opened, there will not be solid parts on the link bracket 2 that radially extend into the rear side of the air intake channels α and directly hinder the entry of air. At the same time, no solid parts of the link bracket 2 will be exposed through the air intake channels α, thereby ensuring the aesthetics of the vehicle.

In addition, based on the above structure, a preferred but not necessarily required solution includes: the inner frame 1b and the link bracket 2 are provided with magnetic parts that can attract each other respectively. The beneficial effects of such arrangement include: even if the active air intake grille is configured for a long time, and there may be some matching deviations between its components, which may cause the link bracket 2 to be unable to move to the right place simply under the driven by the driving device 3, due to the magnetic parts that can attract each other, the inner frame 1b and the link bracket 2 can still fit into the right place under the attraction force of the magnetic parts, and the situation where the blades 6 cannot be closed tightly will not occur.

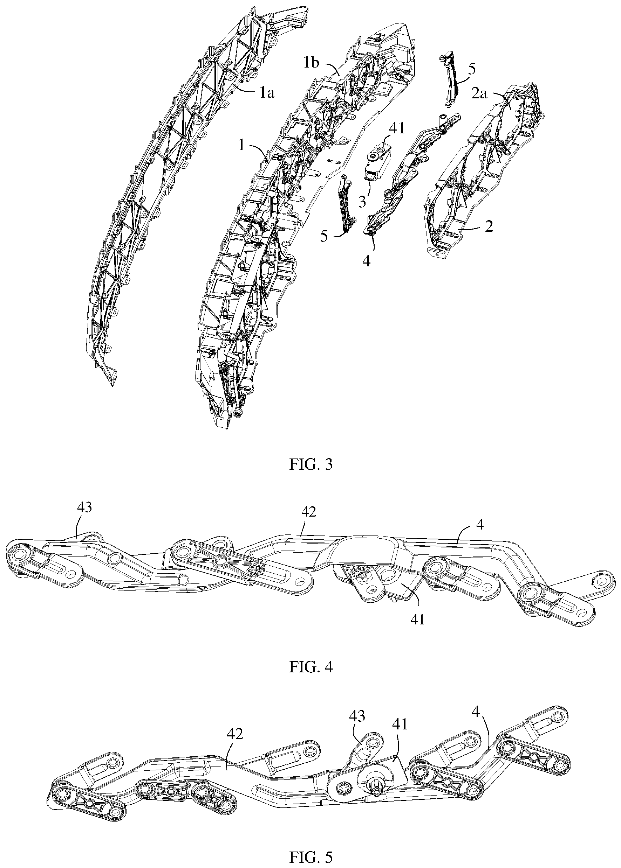

Please continue to refer to FIGS. 3 and 4, in order to make the link bracket 2 move and drive the blades 6 to move relative to the fixed bracket 1, the driving device 3 is required to drive the first link mechanism 4 to drive the link bracket 2. Based on this, illustratively, the air intake grille further includes a driving shaft 41 fixed to the driving device 3. One end of the driving shaft 41 is fixed to the driving device 3, and the other end of the driving shaft 41 is rotatably connected to the first link mechanism 4. At the same time, the inner frame 1b is approximately a long U-shaped piece with an opening facing the rear side of the vehicle. The link bracket 2 moves forward and backward along the opening of the U-shaped in aner frame 1b. The driving device 3 is located below the inner frame 1b, and the first link mechanism 4 is located under the lower side of the link bracket 2 and between the inner frame 1b and the link bracket 2, and the first link mechanism 4 is connected to both of the inner frame 1b and the link bracket 2. In this embodiment, the driving device 3 is operated and drives a driving shaft 41 to rotate, so that the first link mechanism 4 can drive the link bracket 2 to move forward and backward relative to the fixed bracket 1.

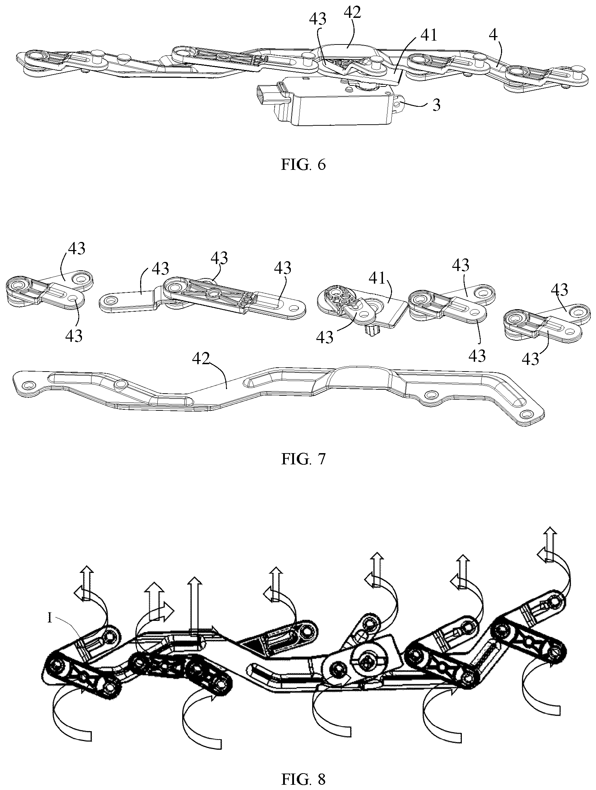

Please continue to refer to FIGS. 4 and 5, the first link mechanism 4 also illustratively includes a main rod body 42 and a plurality of support arms 43 connected with the main rod body 42. One end of each of the support arms 43 is rotatably connected to the main rod body 42 or other support arms 43 or the driving shaft 41 in the orientation shown in FIGS. 6 and 7. The first link mechanism 4 is configured as follows: one of the support arms 43 shares a common rotation axis with the driving shaft 41, the driving device 3 drives the driving shaft 41 to rotate, and the driving shaft 41 can drive the support arms 43 sharing the common rotation axis with it to rotate, thereby driving the other support arms 43 and the main rod body 42 to move, forming the movement of the first link mechanism 4. Illustratively, when the driving shaft 41 moves along the clockwise direction shown in FIG. 8, the other support arms 43 will move along the corresponding directions marked in FIG. 8 (for example, the support arm 43 at position I rotates counterclockwise in FIG. 8 and moves toward one side of the first link mechanism 4), and the first link mechanism 4 drives the link bracket 2 to move from front to back, so that the air intake unit 10 is changed from a closed state to an open state. Similarly, when the driving device 3 drives the driving shaft 41 to move along the counterclockwise direction in FIG. 8, the link bracket 2 can be reset to its original position along back to front direction, and the air intake unit 10 is reclosed. It should be noted that, in a possible embodiment, the driving shaft 41 may be assembled with the driving device 3 into an integral assembly, or may be assembled with the first link mechanism 4 into an integral assembly, or may be a separate body independent from the first link mechanism and the driving device 3.

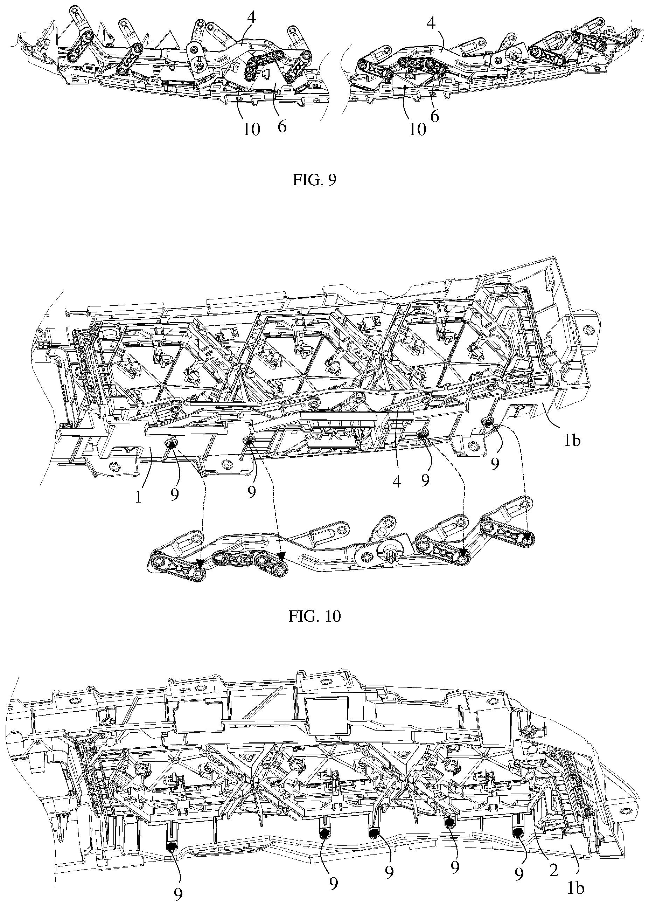

Please continue to refer to FIG. 9, in order to clearly illustrate the movement of different parts of the first link mechanism 4, FIG. 9 shows a first link mechanism 4 located on the left side of the vehicle in this embodiment and another first link mechanism 4 located on the right side of the vehicle in this embodiment, wherein the three air intake units 10 corresponding to the former link mechanism are all in the open states, and the corresponding blades 6 have a certain opening degree of flipping toward the interior of the vehicle, and the three air intake units 10 corresponding to the latter link mechanism are all in the closed states, and the corresponding blades 6 have no opening degree of flipping toward the interior of the vehicle.

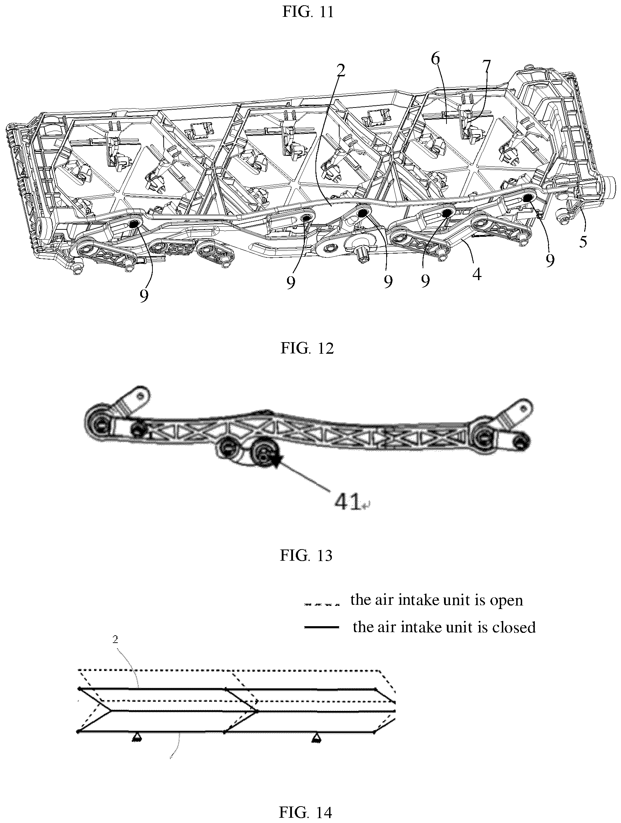

Illustratively, the first link mechanism 4 is rotatably connected to the inner frame 1b and has four connection points 9 as shown in FIG. 10 (these four connection points 9 are blackened for the convenience of illustration). The first link mechanism 4 is also rotatably connected to the link bracket 2 and has five connection points 9 as shown in FIGS. 11 and 12 (these five connection points 9 are blackened for the convenience of illustration).

In addition, it should be noted that the connection manners between the support arms 43 and the support arms 43, the support arms 43 and the main rod body 42, and the support arms 43 and the driving shaft 41 in the first link mechanism 4 can be flexibly arranged according to requirements by person of ordinary skill in the art, on the basis that they clearly know that the link bracket 2 needs to move forward and backward. For person of ordinary skill in the art, disclosing the specific form of the first link mechanism 4 is sufficient for a person of ordinary skill in the art to implement the structure under the premise of conducting a limited number of tests.

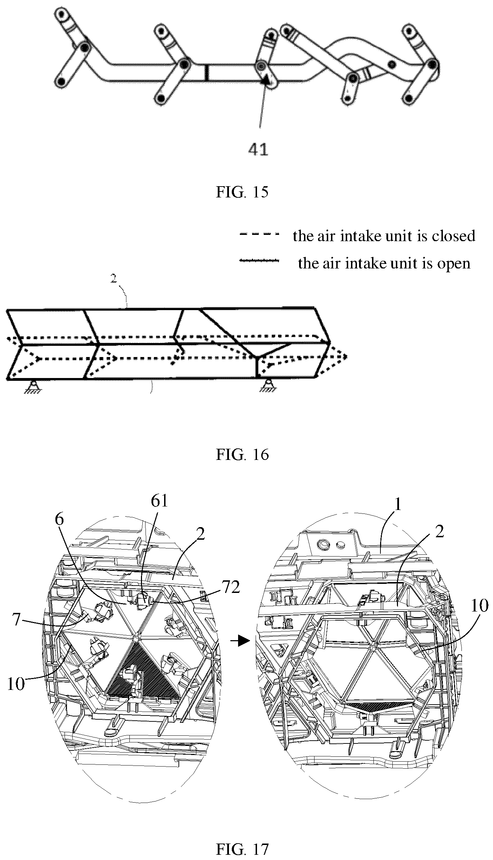

It is easy to know that the first link mechanism 4 can not only have the above-mentioned structure, and those of ordinary skill in the art can adjust and redesign the specific form of the first link mechanism 4. For example, the first link mechanism 4 can be in a form as shown in FIG. 13, and have a simplified motion diagram and expected motion stroke as shown in FIG. 14; the first link mechanism 4 can also be in a form as shown in FIG. 15, and have a simplified motion diagram and expected motion stroke as shown in FIG. 16.

It should also be noted that by applying any one of all the above-mentioned first link mechanisms 4, or a flat linkage structure of the same type, between the link bracket 2 and the fixed bracket 1, the driving device 3 can be arranged below the link bracket 2 and the fixed bracket 1, so that the driving device 3 does not need to be arranged behind the link bracket 2 and the fixed bracket 1, thereby saving space in the vehicle and making it easier for designers to arrange components that need to be cooled (such as the engine) behind the active air intake grille.

Furthermore, from the perspective of structural design, the length of the first link mechanism 4 can be easily determined according to the lengths of the link bracket 2 and the fixed bracket 1 in the left-right direction of the vehicle, thereby ensuring that enough connection points 9 can be arranged between the first link mechanism 4 and the link bracket 2, and ensuring that enough connection points 9 can be arranged between the first link mechanism 4 and the fixed bracket 1, such that the structure formed by the first link mechanism 4, the link bracket 2 and the fixed bracket 1 has a considerable connection strength, ensuring that the link bracket 2 can smoothly drive the blade link mechanism 7 to move, thereby flipping the blades 6 and opening and closing the air intake unit 10.

Please continue to refer to FIG. 17, which is a schematic diagram showing a comparison of a closed air intake unit 10 and an open air intake unit 10. It can be seen from FIG. 17 that the air intake unit 10 includes a plurality of blades 6 and a plurality of blade link mechanisms 7. Based on this, illustratively, the blade link mechanism 7 is rotatably connected to and clamped to the blade 6, and the blade link mechanism 7 is also rotatably connected to and clamped to the link bracket 2.

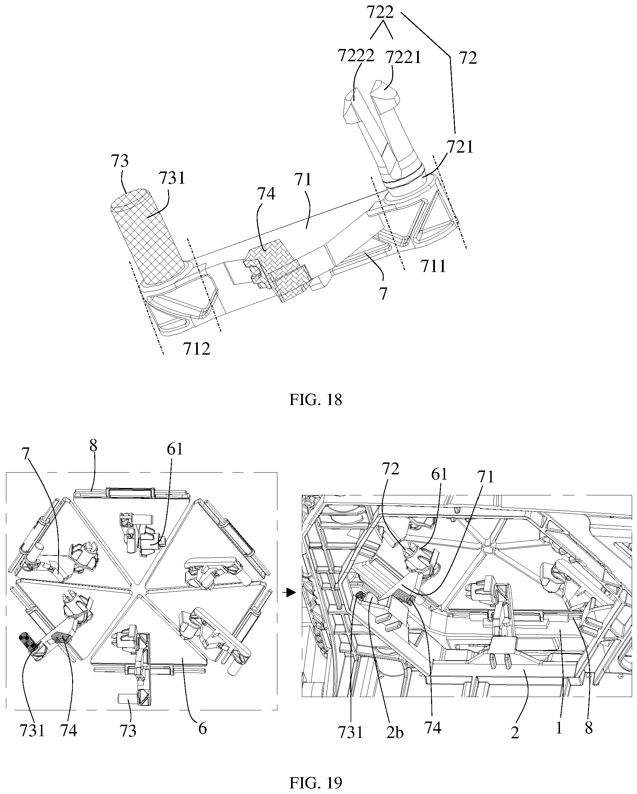

Please continue to refer to FIG. 18 and FIG. 19, illustratively, each of the blades 6 is rotatably connected to the fixed bracket 1 via a flip axis 8. Illustratively, the blade link mechanism 7 includes a main body 71 and a first matching portion 72. The main body 71 is provided with a first base area 711, the first base area 711 and the first matching portion 72 are connected and the first matching portion 72 is arranged on the first base area 711. The first matching portion 72 includes a first shaft portion 721 and a clamping group 722 which are arranged in sequence along a direction gradually far from the main body 71. The clamping group 722 includes a first clamping portion 7221 and a second clamping portion 7222. The first clamping portion 7221 and the second clamping portion 7222 are spaced from each other, the first clamping portion 7221 and the second clamping portion 7222 are both connected to the first shaft portion 721, such that the first clamping portion 7221 and the second clamping portion 7222 can be elastically deformed. Correspondingly, a second matching portion 61 is provided on the blade 6, the clamping group 722 is clamped with the second matching portion 61, and the first shaft portion 721 is rotatably connected with the second matching portion 61. The second matching portion 61 is located between the clamping group 722 and the main body 71, and the clamping group 722 and the first base area 711 are configured to cooperate with each other to restrict at least part of the second matching portion 61 between them, thereby limiting the separation of the blade link mechanism 7 and the blade 6.

Furthermore, for the arrangement of the blade link mechanism 7, a preferred but not necessarily required solution includes: the main body 71 and the first matching portion 72 are integrally formed into a single piece, the first shaft portion 721 and the clamping group 722 are located on the same side of the main body 71, the first shaft portion 721 is extended from the main body 71 along a direction remote from of the main body 71, the first clamping portion 7221 and the second clamping portion 7222 are extended from the first shaft portion 721 along directions remote from the first shaft portion 721. The first clamping portion 7221 and the second clamping portion 7222 each include a clamping head for forming a clamping relationship with the second matching portion 61. The main body 71 and the clamping head are used to cooperate with each other to restrict at least part of the second matching portion 61 between them, thereby limiting the separation of the blade link mechanism 7 and the blade 6.

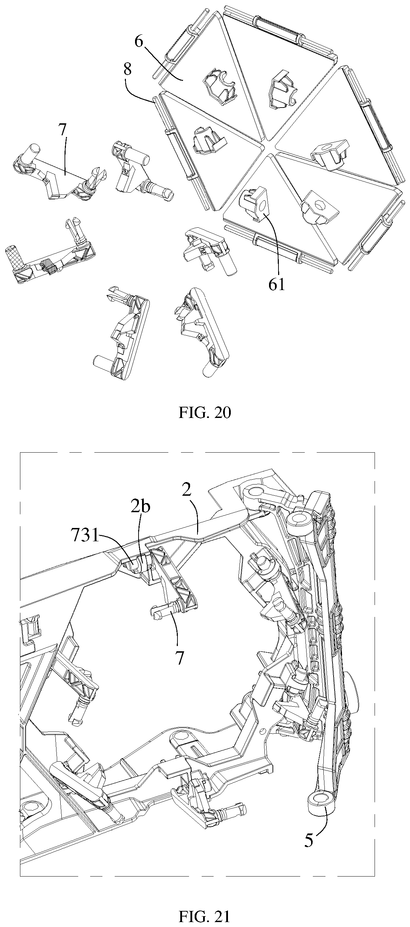

With respect to the above structure, other preferred but not necessarily required solutions include: the first shaft portion 721 is a cylinder with uneven diameter, the second matching portion 61 is substantially a sleeve (see FIG. 20), and the maximum diameter of the first shaft portion 721 is configured so that part of the first shaft portion 721 abuts against the inner wall of the second matching portion 61 without hindering the rotation of the first shaft portion 721.

For the above structure, other preferred but not necessarily required solutions include: the first shaft portion 721 is rotatably connected to the second matching portion 61 at the center of gravity of the blade 6. Such arrangement can ensure that the blade 6 is subjected to stable force, and the force required to flip the blade 6 (provided by the driving device 3) is not excessive.

Illustratively, the blade link mechanism 7 further includes a third matching portion 73, and the main body 71 is provided with a second base area 712. The second base area 712 is connected to the third matching portion 73 and the third matching portion 73 is provided on the second base area 712. The third matching portion 73 includes a second shaft portion 731 (for the convenience of illustration, one second shaft portion 731 is shadowed), the link bracket 2 is provided with a fourth matching portion 2b (see FIG. 21), and the second shaft portion 731 is rotatably connected to the fourth matching portion 2b. Based on this structure, another preferred but not necessarily required solution is: the main body 71 and the third matching portion 73 are integrally formed into a single piece, and the second shaft portion 731 extends from the main body 71 along a direction remote from the main body 71.

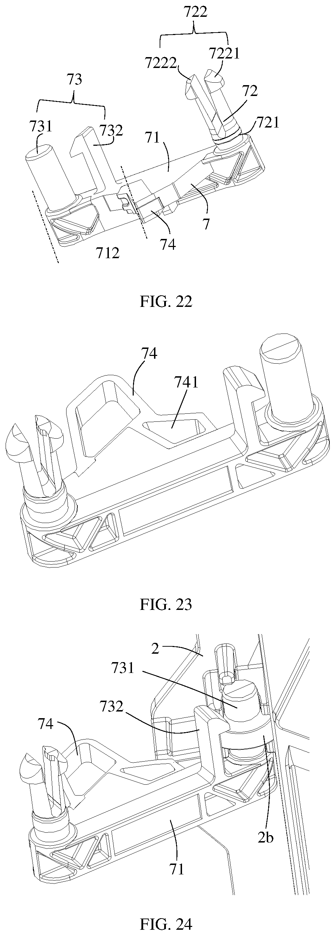

Please continue to refer to FIG. 22, in order to strengthen the connection stability between the blade link mechanism 7 and the fixed bracket 1, the third matching portion 73 further includes a third clamping portion 732. The third clamping portion 732 is spaced apart from the second shaft portion 731 and is clamped with the fourth matching portion 2b. A preferred but not necessarily required solution of the third clamping portion 732 includes: the third clamping portion 732 and the second shaft portion 731 are located on the same side of the main body 71, the third clamping portion 732 extends from the main body 71 along a direction remote from the main body 71, and includes a clamping head for forming a clamping relationship with the fourth matching portion 2b. The main body 71 and the clamping head are used to cooperate with each other to restrict at least part of the fourth matching portion 2b between them, thereby limiting the separation of the blade link mechanism 7 from the fixed bracket 1.

When the blade link mechanism 7 is provided with both the clamping group 722 and the third clamping portion 732, the two ends of the blade link mechanism 7 are clamped with the blade 6 and the link bracket 2 respectively. Such a design can ensure that the blade link mechanism 7 has a reliable connection stability with the blade 6 and the link bracket 2, ensuring that the blade link mechanism 7 will not be detached from the blade 6 and the link bracket 2 under various driving conditions (for example, when the vehicle is bumpy).

With respect to the above structure, other preferred but not necessarily required solutions include: as mentioned above, the clamping group and the main body 71 restrict at least a portion of the second matching portion 61 between them, the third clamping portion 732 and the main body 71 restrict at least a portion of the fourth matching portion 2b between them, the margin that the second matching portion 61 can move between the clamping group and the main body 71 is regarded as a first margin, and the margin that the fourth matching portion 2b can move between the third clamping portion 732 and the main body 71 is regarded as a second margin. Preferably, the second margin is greater than the first margin. The reason for such arrangement is that, under the premise of ensuring that the blade link mechanism 7 will not fall out, an appropriate space for movement is reserved in the assembly chain of the blade 6, the blade link mechanism 7 and the link bracket 2, so that when the vehicle is bumpy, the force generated by the bump is transmitted to the blade 6, the blade link mechanism 7, and the link bracket 2, and the force will cause the fourth matching portion 2b to jump between the third clamping portion 732 and the main body 71, and be consumed in this jumping, and will not cause unnecessary mutual movement or collision, or stress, between other tightly assembled components in the active air intake grille.

With respect to the above structure, other preferred but not necessarily required solutions include: the positions of the first matching portion 72 and the third matching portion 73 on the main body 71 can be interchanged, and correspondingly, the characteristic structure of the second matching portion 61 on the blade 6 and the characteristic structure of the fourth matching portion 2b on the link bracket 2 can also be interchanged.

Please continue to refer to FIGS. 18 and 19, illustratively, the blade link mechanism 7 further includes an elastic portion 74 (one elastic portion 74 is shadowed for convenience of illustration), the elastic portion 74 is connected to the main body 71 and is used to abut against the link bracket 2 to play a buffering role when the blade link mechanism 7 and the link bracket 2 move relative to each other.

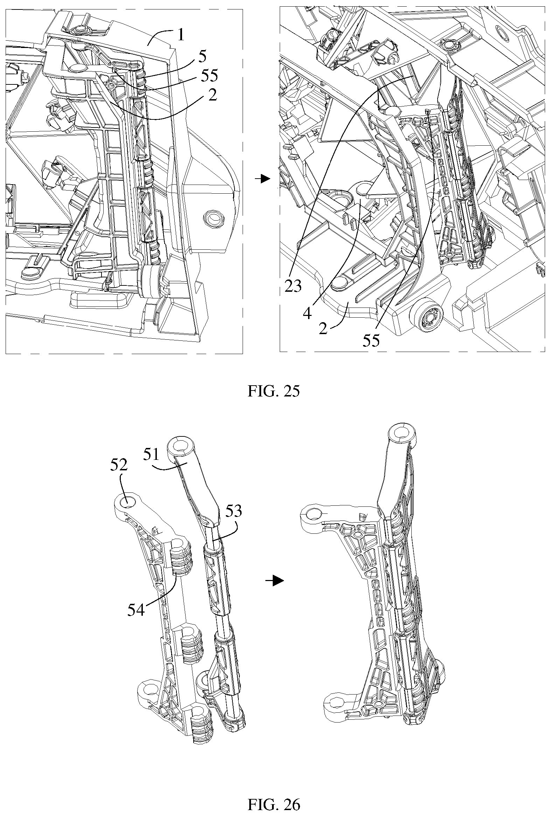

Please continue to refer to FIG. 23, for the above structure, other preferred but not necessarily required solutions include: the elastic portion 74 is provided with at least one penetration area 741, and the penetration area 741 is used to facilitate the deformation of the part of the elastic portion 74 which surrounds the penetration area 741 and is close to the edge of the elastic portion 74. As shown in FIGS. 24 and 25, other preferred but not necessarily required solutions include: the number of penetration areas 741 is two or more, different penetration areas 741 are used to facilitate the deformation of different positions of the elastic portion 74, and the different positions of the elastic portion 74 are used to play a buffering role at different moments of the movement of the blade link mechanism 7 and the link bracket 2. Other preferred but not necessarily required solutions include: the penetration area 741 is polygonal or circular; the elastic portion 74 is integrally formed with the main body 71 by insert injection molding.

It should also be noted that, as can be seen from the above, the blade link mechanism 7 is actually equivalent to a rotating connector, that is, this embodiment further provides a rotating connector. One of the second component and the first component is the blade 6, and the other is the link bracket 2. The design principles of the connector include:

A rotating connector, for connecting with a first component and a second component at different positions thereof, including a main body 71 and a third matching portion 73 connected to the main body 71, the main body 71 is provided with a second base area 712, the third matching portion 73 is arranged on the second base area 712, and the third matching portion 73 includes a second shaft portion 731 and a third clamping portion 732 spaced with each other;

The second component is provided with a fourth matching portion 2b, the second shaft portion 731 is configured for rotatably connecting with the fourth matching portion 2b, the third clamping portion 732 is configured for clamping with the fourth matching portion 2b, and the main body 71 and the third clamping portion 732 are used to cooperate with each other to limit at least part of the fourth matching portion 2b therebetween, thereby limiting the movement of the fourth matching portion 2b and limiting the separation of the connector from the second component.

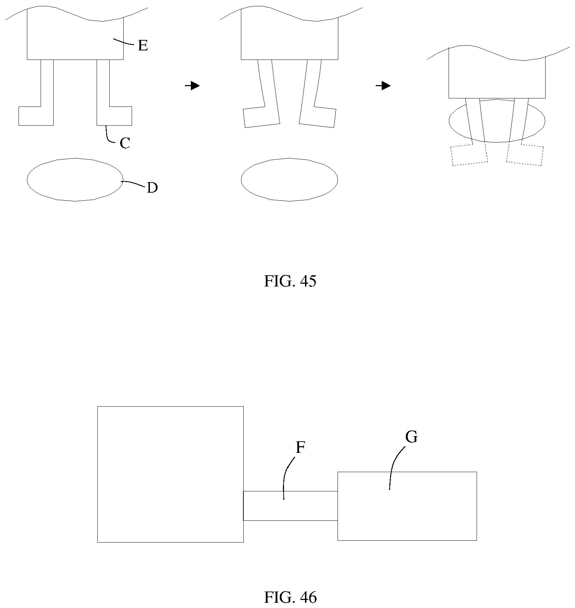

Based on the above structure, we also need to discuss some background of setting up connectors in related technologies, including:
In the related art, transmission between two components often requires the use of connectors; one of the two components is regarded as the first component and the other is regarded as the second component, and the connector needs to be connected to the first component and the second component at different positions thereof, respectively. In order to prevent the connector from being separated from the component, corresponding stop features need to be designed in the structure formed by the connector and the component, such as snap-in features as clamping portions C, to prevent the connector from being separated from the component. Based on this, some connection structures between the connector and the component may include two spaced clamping portions C and a clamping hole D as shown in FIG. 45, wherein the two clamping portions C are integrally formed on the entity portion E of one of the connector and the component, and can be elastically deformed. When the connector and the component need to be assembled, it is only necessary to apply force to the two clamping portions C to temporarily bring them close to each other, and then insert them into the clamping hole D and remove the external force to complete the snap connection between the connector and the corresponding component. At this time, the entity portion E and the clamping portion C will cooperate with each other so that the connector and the component will not be separated from each other in a direction parallel to the center line of the clamping hole D.

Based on the above, in the structure where the transmission between the first component and the second component is achieved by a connector, in some embodiment, the connection between the first component and the connector, and the connection between the second component and the connector are configured to two clamping portions C to form a clamping relationship. The disadvantage of this embodiment is that two pairs, or a total of four clamping portions C, are required to be set at one time, which is prone to at least one of the problems of high production cost, high production precision, high assembly difficulty (force needs to be simultaneously applied to the clamping portions C at different connection positions during assembly) of the connection structure of the connector and the component.

Correspondingly, for the rotation connector, firstly, since only the third clamping portion C is provided on one end of the rotating member, the connector can be connected to and be clamped with the second component by the cooperation between the third clamping portion C and the main body 71. Therefore, as compared with the structure of providing four clamping portions C in the related art, it has the advantage of relatively low production cost. Secondly, since the third clamping portion C and the second shaft portion 731 are designed to be spaced apart, the production precision requirement of the connector is also relatively low. Finally, since only the third clamping portion C is provided on one end of the rotating member, the connector can be connected to and be clamped with the second component by the cooperation between the third clamping portion C and the main body 71. Therefore, the assembly of the end where the third clamping portion C is located does not require workers to apply force to the pairs of the clamping portions C at different ends of the rotating member at the same time, and the assembly difficulty of the connector is also relatively low.

It should be noted that since one of the second component and the first component is the blade 6 and the other is the link bracket 2, all the aforementioned settings related to the blade 6, the link bracket 2, and the blade link mechanism 7 can be applied to the second component, the first component, and the connector.

Based on this, the present embodiment actually further provides a push-pull structure, and the design principle of the push-pull structure is: the push-pull structure includes a first component, a second component and the connector, and the connector is rotatably connected to the first component and the second component at different positions thereof, and is also clamped with the first component and the second component, and the movement of the first component and the second component can be transmitted by the connector.

Please continue to refer to FIG. 25, illustratively, the active air intake grille further includes a second link mechanism 5. Corresponding to the arrangement of the first link mechanism 4 located at the lower side of the link bracket 2, the second link mechanism 5 is connected to the upper end of the fixed bracket 1, the lower end of the fixed bracket 1, the upper end of the link bracket 2 and the lower end of the link bracket 2. When the first link mechanism 4 moves to drive the link bracket 2 to move relative to the fixed bracket 1, the second link mechanism 5 will undergo an adaptive movement.

At the same time, there are at least two connections between the second link mechanism 5 and the link bracket 2, and the at least two connections of the second link mechanism 5 are respectively located on the two opposite ends of the link bracket 2. There are at least two connections between the second link mechanism 5 and the fixed bracket 1, and the at least two connections of the second link mechanism 5 are respectively located on the two opposite ends of the fixed bracket 1.

Based on the above, the second link mechanism 5 is used to transmit the force transmitted by the first link mechanism 4 to the connection between the first link mechanism 4 and the link bracket 2 to the entire link bracket 2, ensuring that the opening and closing action of the air intake unit 10 can be carried out smoothly under any driving conditions, and ensuring the structural strength and the modal of the system formed by the blade 6, the link bracket 2 and the fixed bracket 1.

A more detailed description of this is that since the first link mechanism 4 is arranged on the lower side of the link bracket 2 and is located between the link bracket 2 and the fixed bracket 1, the first link mechanism 4 is equivalent to being arranged at the lower part of the active air intake grille, and the first link mechanism 4 is equivalent to driving the link bracket 2 in a "push-pull" manner. Based on this, firstly, when the vehicle needs to resist strong wind, such as when driving on highway, the active air intake grille with the second link mechanism 5 can quickly transfer the force applied by the first link mechanism 4 to the lower part of the link bracket 2 to the entire link bracket 2, thereby ensuring that the blade 6 can smoothly complete the required flipping action under strong wind and open and close the air intake unit 10. Secondly, since the second link mechanism 5 is connected to the upper and lower ends of the link bracket 2 and to the upper and lower ends of the fixed bracket 1, the system of the blade 6, the link bracket 2 and the fixed bracket 1 is equivalent to having a sturdy and movable bridge that can transmit force, which undoubtedly increases the structural strength and the modal of the entire system, and indirectly increases the structural strength and the modal of the entire active air intake grille.

Please continue to refer to FIG. 26, illustratively, the second link mechanism 5 includes a first separate body 51 and a second separate body 52 that are rotatably connected with each other. One of the first separate body 51 and the second separate body 52 is rotatably connected to the fixed bracket 1, and the other of the first separate body 51 and the second separate body 52 is rotatably connected to the link bracket 2. In addition, a preferred but not necessarily required solution includes: an shaft portion 53 is provided on one of the first separate body 51 and the second separate body 52, and a rotating connection portion 54 is provided on the other of the first separate body 51 and the second separate body 52, and the rotating connection portion 54 is rotatably connected to the shaft portion 53. FIG. 26 illustrates an embodiment in which the shaft portion 53 is arranged on the first separate body 51 and the rotating connection portion 54 is arranged on the second separate body 52.

A preferred but not necessarily required solution further includes: the rotating connection portion 54 is a sleeve portion with a side opening integrally formed on one of the first separate body 51 and the second separate body 52, and the shaft portion 53 is a cylinder integrally formed on the other of the first separate body 51 and the second separate body 52. In the embodiment shown in FIG. 26, the shaft portion 53 is arranged on the first separate body 51 and the rotating connection portion 54 is arranged on the second separate body 52.

A preferred but not necessarily required solution further includes: the first separate body 51 and the second separate body 52 are both U-shaped, and the U-shaped first separate body 51 is rotatably connected to one of the link bracket 2 and the fixed bracket 1 at one end of its opening, and is rotatably connected to the other of the link bracket 2 and the fixed bracket 1 at the other end of its opening.

A preferred but not necessarily required solution further includes: in the active air intake grille, as shown in FIG. 2, a second link mechanism 5 is connected to the upper left corner and lower left corner of the link bracket 2 of the vehicle, and is connected to the upper left corner and lower left corner of the fixed bracket 1 of the vehicle. There is a second link mechanism 5 connected to the upper right corner and lower right corner of the link bracket 2 of the vehicle, and is connected to the upper right corner and lower right corner of the fixed bracket 1 of the vehicle.

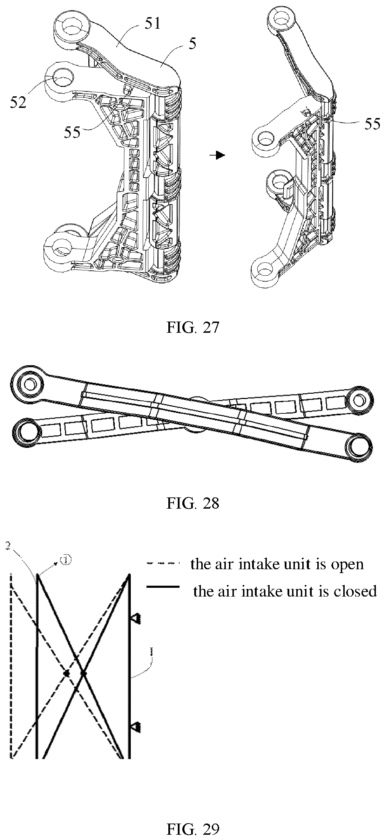

Please continue to refer to FIG. 27, a preferred but not necessarily required solution further includes: a force distribution part 55 protruding upwardly relative to its peripheral portion is further provided on the second separate body 52.

As shown in FIG. 25, the purpose of setting the force distribution part 55 is to share the force exerted on the blade 6 during the opening and closing process of the air intake unit 10. A more detailed description of this is that, in some possible embodiments, the blade 6 will contact the support bracket 23 of the outer frame 1a when it flips from the inside to the outside of the vehicle to the extent of closing the air intake unit 10, and the judgment condition (i.e., the operation logic) for the driving device 3 to stop driving the link bracket 2 to move forward includes that the driving device 3 stops driving the link bracket 2 to move forward when encountering a certain resistance; wherein, the "certain resistance" refers to a reaction force with a certain value between the blade 6 and the support bracket 23, when the blade 6 flips to the extent of closing the air intake unit 10, and the blade 6 is hindered by the support bracket 23 of the outer frame 1a.

In other words, under the judgment logic, in order to satisfy the judgment condition that the driving device 3 stops driving the link bracket 2 to move forward, it is necessary that the blade 6 firstly collides with the support bracket 23 under the drive of the driving device 3, and the force of the collision between the blade 6 and the support bracket 23 is transmitted to the driving device 3 in the form of resistance.

Based on this, the force distribution part 55 is provided, and by configuring the force distribution part 55 so that when the blade 6 collides with the support bracket 23, the first separate body 51 collides with the force distribution part 55 at the same time, the force generated by the collision of the first separate body 51 and the force distribution part 55 will also be fed back to the driving device 3 in the form of resistance, so that the resistance received by the driving device 3 actually becomes a resultant force composed of the force between the first separate body 51 and the force distribution part 55 and the force between the blade 6 and the support bracket 23, and the resultant force can easily meet the judgment condition of the driving device 3, so that the driving device 3 immediately stops driving the link bracket 2 forward. Based on this, due to the existence of the force between the first separate body 51 and the force distribution part 55 with a sharing value, the force that the blade 6 needs to be subjected to will naturally decrease during the collision between the blade 6 and the support bracket 23. Such a design can reduce the probability of the blade 6 being deformed in appearance (i.e., being dented on the surface due to excessive impact with the support bracket 23) during long-term use of the active air intake grille.

It should be noted that, if one wants to design an expected obstruction to the blade 6 so as to provide the driving device 3 with a resistance that satisfies the judgment conditions, it is also possible not to adopt the above-mentioned solution of making the blade 6 collide with the support bracket 23, but to set other stop features on the fixed bracket 1 and on the rotation track of the blade 6.

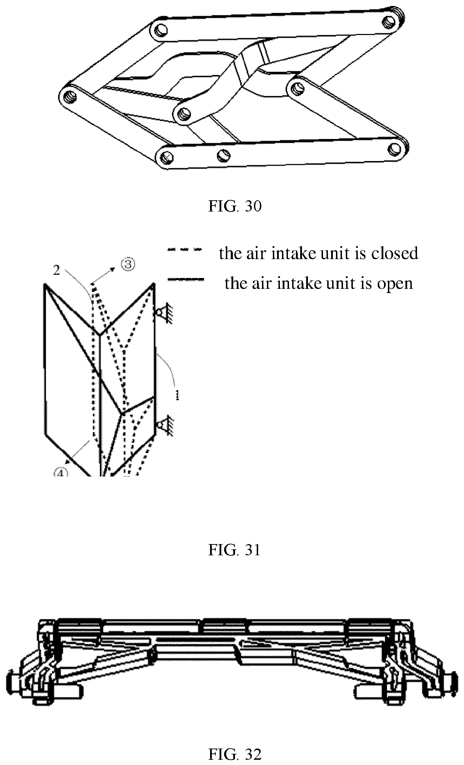

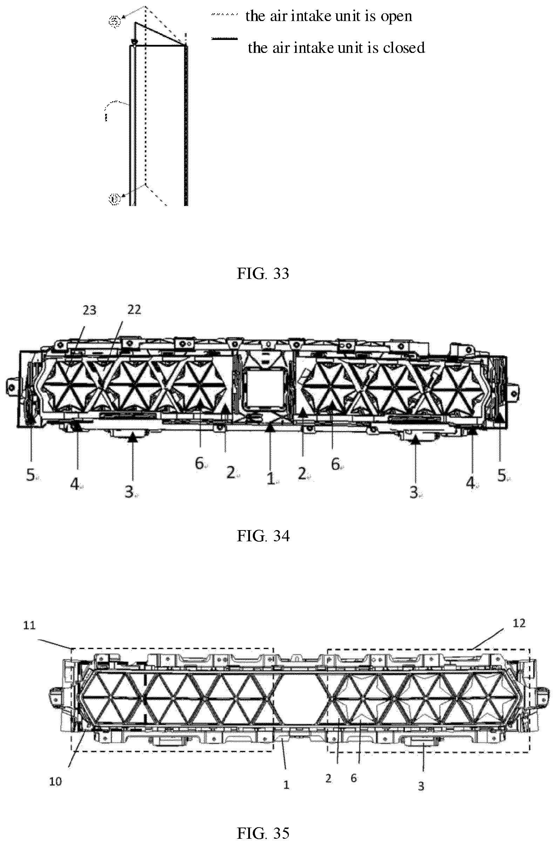

It should also be noted that the second link mechanism 5 can adopt not only the above-mentioned structure, and those of ordinary skill in the art can adjust and redesign the specific form of the second link mechanism 5. For example, the second link mechanism 5 can be in a form as shown in FIG. 28, and have a motion diagram and expected motion stroke as shown in FIG. 29, and points ① and ② in FIG. 29 respectively represent the connection between the second link mechanism 5 and the upper end and lower end of the link bracket of the vehicle. The second link mechanism 5 can also be in a form as shown in FIG. 30, and have a motion diagram and expected motion stroke as shown in FIG. 31, and points ③ and (4) in FIG. 31 respectively represent the connection between the second link mechanism 5 and the upper end and lower end of the link bracket of the vehicle. The second link mechanism 5 can also be in a form as shown in FIG. 32, and have a motion diagram and expected motion stroke as shown in FIG. 33, and points ⑤ and ⑥ in FIG. 33 respectively represent the connection between the second link mechanism 5 and the upper end and lower end of the link bracket of the vehicle.

It should also be noted that, based on the above structure, this embodiment further provides a mobile structure, with the link bracket 2 as the movable part to be moved, and the fixed bracket 1 as the fixed part. The setting principle of the mobile structure includes: the mobile structure includes the movable part, the fixed part, the first link mechanism 4 and the second link mechanism 5. The fixed part is fixed in a fixed position, the first link mechanism 4 is located on one side of the movable part and is respectively connected to the movable part and the fixed part at different positions thereof. The second link mechanism 5 is respectively connected to the movable part and the fixed part at different positions thereof. The first link mechanism 4 can drive the movable part to be moved relative to the fixed part under the action of an external force, and make the second link mechanism 5 perform an adaptive movement.

There are at least two connections between the second link mechanism 5 and the movable part, and the at least two connections of the second link mechanism 5 are respectively located at two opposite ends of the movable part. There are at least two connections between the second link mechanism 5 and the fixed part, and the at least two connections of the second link mechanism 5 are respectively located at two opposite ends of the fixed part. The second link mechanism 5 is used to transmit the force transmitted by the first link mechanism 4 to the connection between the first link mechanism 4 and the movable part to the entire movable part.

The second link mechanism 5 includes a first separate body 51 and a second separate body 52 which are rotatably connected with each other. One of the first separate body 51 and the second separate body 52 is rotatably connected to the fixed bracket 1, and the other of the first separate body 51 and the second separate body 52 is rotatably connected to the link bracket 2. One of the first separate body 51 and the second separate body 52 is provided with a shaft portion 53, and the other of the first separate body 51 and the second separate body 52 is provided with a rotating connection portion 54, and the rotating connection portion 54 is rotatably connected to the shaft portion 53.

It should be noted that, since the fixed part is the fixed bracket 1 and the movable part is the link bracket 2, all the above-mentioned settings of the fixed bracket 1 and the link bracket 2 can be applied to the fixed part and the movable part respectively.

Based on the above structure, it is also necessary to discuss some background of setting up the mobile structure in the related technology, including: in the related technology, if it is necessary to make a movable part reciprocate along a certain expected trajectory relative to a fixed part, for example, it is necessary to move the movable part forward and backward relative to the fixed part, the commonly used design includes: as shown in FIG. 46, the side surface of the movable part is connected to a driving device as the motor assembly G with a telescopic rod F, and on the premise that the telescopic rod F is set parallel to the front and rear directions, the movable part is driven by the motor assembly G to realize the reciprocating motion.

The disadvantage of this design is that when the contact position between the motor assembly G and the movable part is not the center of gravity of the movable part, and the volume of the movable part is much larger than the contact area between the telescopic rod F and the movable part, the movable part is equivalent to being pushed by a single point. Since the movable part is pushed by a single point, when the movable part is also affected by other external forces (for example, it needs to resist strong winds), the movement stability of the movable part will be relative poor.

Correspondingly, due to the mobile structure is provided with the second link mechanism 5, the second link mechanism 5 forms a rapid force transmission bridge between the movable part and the fixed part, and can strengthen the structural strength and the modes of the entire mobile structure through the connection between the second link mechanism 5, the movable part and the fixed part. Therefore, the mobile structure provided in this embodiment has better motion stability than the related technology. Similarly, the movable part also has good motion stability.

### The second embodiment

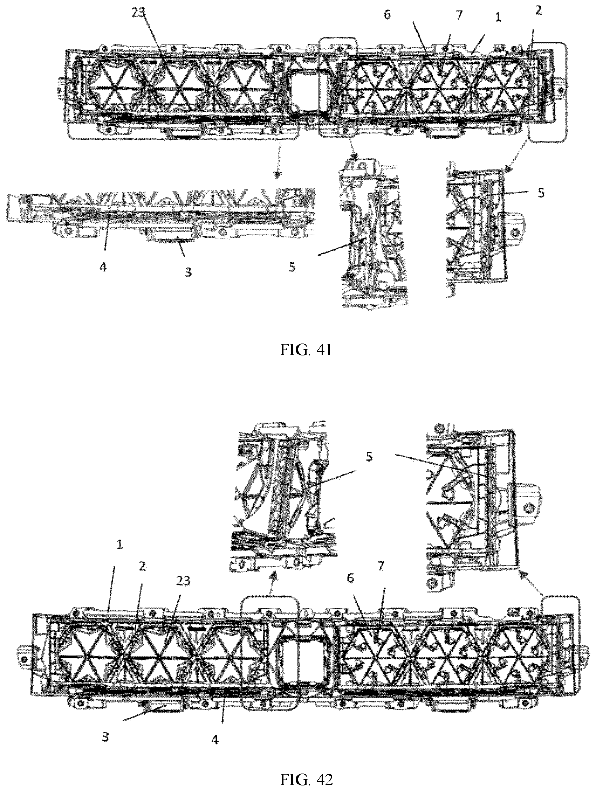

The present document provides an active air intake grille, please refer to FIGS. 34-43, FIG. 13, FIG. 15, FIG. 28, FIG. 30 and FIG. 32, the active air intake grille includes: a fixed bracket 1, a link bracket 2, a driving device 3, a first link mechanism 4 and at least one air intake unit 10. The air intake unit 10 includes a plurality of blades 6 and a plurality of blade link mechanisms 7. The link bracket 2 is rotatably connected to the first end of each of the plurality of blade link mechanisms 7, the second end of each blade link mechanism 7 is rotatably connected to the first end of each blade 6 respectively, and the second end of the blade 6 is rotatably connected to the fixed bracket 1. The first end of the first link mechanism 4 is connected to the link bracket 2, the second end of the first link mechanism 4 is connected to the driving device 3. The driving device 3 drives the first link mechanism 4 to move, the first link mechanism 4 drives the link bracket 2 to move, the link bracket 2 drives the blade link mechanism 7 to move, and the blade link mechanism 7 drives the first end of the blade 6 to rotate to open or close the air intake unit 10.

In the present document, the first link mechanism 4 is connected to the driving device 3. Under the driving action of the driving device, the driving device drives the driving shaft 41 of the first link mechanism 4 to move, thereby driving the first link mechanism 4 to move, and one end of the first link mechanism 4 is connected to the link bracket 2. During the movement of the first link mechanism 4, the first link mechanism 4 drives the link bracket 2 to move along the thickness direction of the link bracket 2. The link bracket 2 is rotatably connected to the first end of the blade link mechanism 7, the second end of the blade link mechanism 7 is rotatably connected to the blade 6, and the blade 6 is rotatably connected to the fixed bracket 1. During the movement of the link bracket 2 along the thickness direction of the link bracket 2, the link bracket 2 drives the blade to rotate through the blade link mechanism 7. After the blade rotates, the air intake unit 10 opens, thereby achieving the air intake effect. Under the condition of the same blade opening angle, compared with the traditional active air intake grille, the effective air intake area of the active air intake grille of the present document is significantly increased, thereby improving the heat dissipation efficiency. The present document is provided with multiple blades, and under the condition of the same blade area, the wind force is shared among the multiple blades, thereby improving the bearing capacity of the overall air intake unit 10 and making it uneasy to damage. The present document connects multiple groups of blades with the link bracket, thereby ensuring the synchronization of the movement of each blade during the movement of the link bracket along the thickness direction of the link bracket.

In some embodiments, one end of the first link mechanism 4 is fixed to the fixed bracket 1. By fixing the first link mechanism 4 to the fixed bracket 1, when the first link mechanism 4 drives the link bracket 2 to move toward or away from the second end of the blade 6, the stability of the movement of the link bracket is improved.

In some embodiments, a second link mechanism 5 is further included. One end of the second link mechanism 5 is fixed to the fixed bracket 1, and the other end of the second link mechanism 5 is fixed to the link bracket 2. It should be noted that the first link mechanism 4 can be arranged along the length direction of the active air intake grille, that is, after the active air intake grille is installed on the vehicle, the first link mechanism 4 is arranged at the bottom of the active air intake grille. The second link mechanism is arranged along the width direction of the active air intake grille, that is, after the active air intake grille is installed on the vehicle, the first link mechanism 4 is arranged on the lateral side of the active air intake grille. The present document sets the first link mechanism and the second link mechanism, and utilizes the first link mechanism to drive the second link mechanism. The first link mechanism and the second link mechanism jointly drive the movement of the link bracket, thereby ensuring the balance, synchronization and simultaneity of the link bracket during movement, thereby improving the angular synchronization and angular stability when multiple blades rotate.

In some embodiments, the active air intake grille includes a first air intake portion 11 and a second air intake portion 12. The first air intake portion 11 and the second air intake portion 12 are respectively provided with a driving device 3, a first link mechanism 4 and at least one air intake unit 10. The driving device 3 is electrically connected to the controller of the vehicle, and the controller is used to individually control the driving devices 3. The present document at least divides the entire active air intake grille into a first air intake portion 11 and a second air intake portion 12. The blade movement directions of the first air intake portion 11 and the second air intake portion 12 can be individually controlled by independent driving motors, so that the blade movement directions and rotation angles of the first air intake portion 11 and the second air intake portion 12 can be consistent or inconsistent. The opening angles of the blades in the air intake units 10 of the first air intake portion 11 and the second air intake portion 12 can be set according to requirements, and the applicability is wide. Preferably, the first air intake portion 11 and the second air intake portion 12 are further provided with a second link mechanism 5 respectively.

In some embodiments, when the air intake unit 10 is in an open state, at least two blades 6 are not parallel to each other, so that the directions of the at least two blades 6 are inconsistent. Therefore, when the air intake unit 10 is in the open state, air intake at multiple angles of the air intake unit 10 is achieved.

In some embodiments, the second end of the blade link mechanism 7 is axially connected to the free end of the blade 6. The connecting end of the blade 6 is axially connected to the fixed bracket 1, and a single blade 6 is axially connected to at least one blade link mechanism 7. The number of the blade link mechanisms 7 can be set according to requirements and is not limited here.

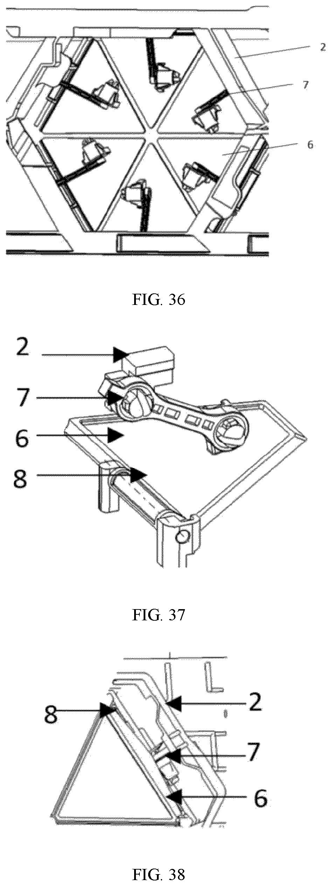

In some embodiments, please refer to FIGS. 36-39, a rotation axis is provided at the connection between the blade 6 and the fixed bracket 1, and the blade 6 can move around the rotation axis in a direction away from the fixed bracket 1. The blades 6 in a single air intake unit 10 have different rotation directions. Compared with single-opening or double-opening (i.e. opening in two directions) manner, the present document saves more internal space. In addition, in the exposed air intake grille, regulations require that it cannot be opened outwards. If the axis of a single-opening grille is in the middle, it does not meet the regulatory requirements. If the axis locates at the edge and opens inwardly, internal space will be wasted. The multi-directional inward opening manner of the present document can save internal space while meeting the air intake requirements. Moreover, the air intake direction in single-opening manner deviates from the driving direction of the vehicle, which will have a certain impact on the stability of the vehicle body when the vehicle speed is high. Blades in the present document and the double-opening manner open symmetrically, the air intake and the driving directions are consistent with each other, and will not affect the stability of the vehicle body. It should be noted that the rotation axis can be a whole axis or a half axis. Preferably, the rotation axis is a whole axis, which improves the safety performance of the air intake grille during operation.

In some embodiments, the appearance surface of the active air intake grille is arc-shaped. The appearance surface of the active air intake grille of the present document is arc-shaped, which realizes the mobility of the active air intake grille in the arc-shaped surface. After the active air intake grille is installed on the vehicle, the arc-shaped structure provides a larger usable space, which can be used to enclose bumpers of various types of structures, and has a wide range of applications, and makes the appearance of the active air intake grille of the present document more beautiful.

In some embodiments, please refer to FIG. 43, a schematic diagram of the air intake grilles of the air intake units 10 of different shapes in the embodiments of the present document is provided. The shape of the blade 6 includes at least one of a triangle, a trapezoid and a sector. The trapezoid may include a straight trapezoid and an arc-bottom trapezoid, and the shape of the air intake unit 10 includes at least one of a circle and a polygon. Specifically, the blades are arranged in a circle. For example, when the blades are triangular and one air intake unit 10 is provided with three blades, the shape formed by the three blades after closing is a triangle, that is, the air intake unit 10 is shaped in a triangle as shown in FIG. 43(c). If the blades are triangular and one air intake unit 10 is provided with four blades, the shape formed by the four blades after closing is a square, that is, the air intake unit 10 is shaped in a quadrilateral as shown in FIG. 43(d). If the blades are triangular and one air intake unit 10 is provided with five blades, the shape formed by the five blades after closing is a pentagon, that is, the air intake unit 10 is shaped in a pentagon as shown in FIG. 43(a). If the blades are triangular and one air intake unit 10 is provided with six blades, the shape formed by the six blades after closing is a hexagon, that is, the air intake unit 10 is shaped in a hexagon. If the blades are sector-shaped and one air intake unit 10 is provided with four blades, the shape formed by the four blades after closing is a circle, that is, the air intake unit 10 is shaped in a circle as shown in FIG. 43(b). It should be noted that the shape and structure of the link bracket can be modified according to the change of the shape and structure of the blade.

In some embodiments, a plurality of air intake unit mounting ports are provided on the fixed bracket, and the air intake unit mounting ports correspond to the air intake units 10 in one-to-one manner. The shape of the air intake unit mounting port includes at least one of a circle and a polygon, and a plurality of blades are arranged circumferentially along the edge of the air intake unit mounting port. A support bracket 23 is arranged in the air intake unit mounting port. For example, when the air intake unit 10 is hexagonal, the support bracket 23 divides the hexagonal air intake unit mounting port into six triangular windows, and each triangular blade is arranged in each triangular window.

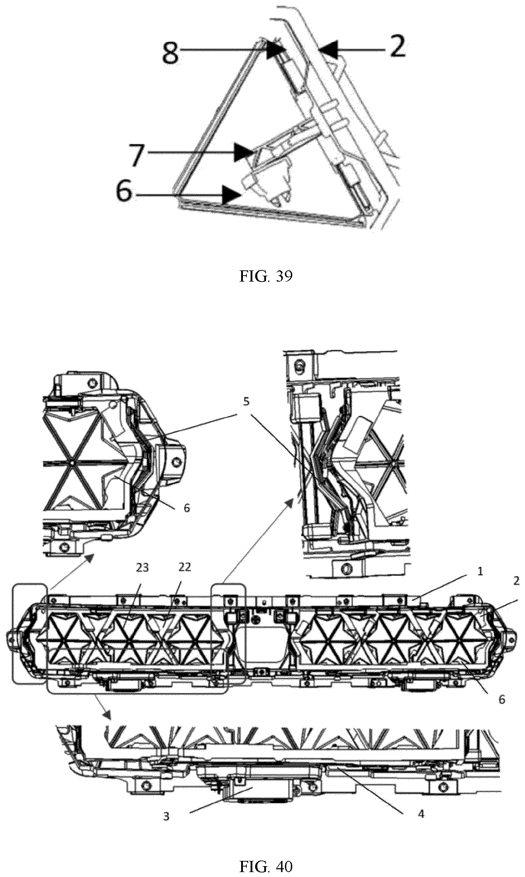

In some embodiments, a redundant blade mounting port 22 is further provided in the fixed bracket. The redundant blade mounting port 22 is located between adjacent air intake unit mounting ports, and corresponding blades are installed in the redundant blade mounting ports 22. When the link bracket drives the blades of the air intake unit to rotate, the blades in the redundant blade mounting port 22 are also driven to rotate. If space allows, the shapes and structures of the redundant blade mounting ports 22 and their corresponding blades can be designed as needed. For example, please refer to FIGS. 34 and 40, a triangular redundant blade mounting port 22 is arranged at the upper and lower portions between two adjacent hexagonal air intake unit mounting ports respectively.

In some embodiments, the rotation angle of the blade 6 is from 0 to 85°. It should be noted that the blade rotation angle of the air intake grille can be controlled according to the heat dissipation requirements of the entire vehicle. The maximum rotation angle of the air intake grille of the present document can reach 85°, and based on the multi-blades arrangement, under the same blade opening angle, compared with the traditional active air intake grille, the active air intake grille of the present document has a larger effective air intake area, thereby improving the heat dissipation efficiency.

In a preferred embodiment, the maximum rotation angle of the blade 6 is infinitely close to a right angle.

In some embodiments, the first link mechanism 4 can be a screw rod, and a screw hole matching the screw rod is provided on the link bracket. The driving device is connected to the screw rod, and the driving device directly drives the screw rod to rotate. The screw rod is generally perpendicular to the outer surface of the active air intake grille. When the screw rod moves, the link bracket is driven to move generally along a direction perpendicular to the outer surface of the grille.

In some embodiments, please refer to FIGS. 13 and 15, the first link mechanism 4 can be a two-link motion mechanism, a Y-shaped eight-link motion mechanism or other structures. The first link mechanism 4 is used to drive the link bracket to move, and the specific structure is not limited to the above embodiments.

In some embodiments, referring to FIG. 28, FIG. 30 and FIG. 32, the second link mechanism 5 includes at least one of a lotus leaf motion mechanism, a scissor-shaped motion fork arm and a Y-shaped eight-link motion mechanism. The second link mechanism 5 is used to transfer the force of the first link mechanism arranged at the bottom end of the link bracket to the upper end of the link bracket, so that the entire link bracket is evenly stressed and maintains movement balance. The specific structure of the second link mechanism 5 is not limited to the above embodiments.

In some embodiments, the driving device is provided with a reduction gear. When the driving device drives the first link mechanism, the reduction gear can be used to increase the torque, and the gear ratio may be 1:2.6.

In some embodiments, the exposed active air intake grille is manufactured by injection molding.

The closing process of the active air intake grille of the present document includes: under the drive of the driving device, the first link mechanism moves in the direction close to the fixed bracket, pulling the link bracket to make a linear motion in the direction close to the fixed bracket, and the link bracket pushes the blade link mechanism to make a rotational movement, so that the blades rotate along the rotation axis until all the blades are closed, thereby realizing the closing of the active air intake grille.

The opening process of the active air intake grille of the present document includes: under the drive of the driving device, the first link mechanism moves in the direction away from the fixed bracket, pulling the link bracket to make a linear motion in the direction away from the fixed bracket, and the link bracket pulls the blade link mechanism to make a rotational movement, so that the blade rotates along the rotation axis. When the blade is at the required angle, the active air intake grille is opened. It should be noted that, according to different requirements, the first link mechanism can be controlled by a driving motor to move to different positions, so that the blades can be opened to different angles to control the effective air intake area of the active air intake grille.

The present document further provides a vehicle, which includes the active air intake grille as described above.

By utilizing the above technical solution, the active air intake grille and the vehicle provided by the present document have the following beneficial effects:

By setting the multiple blades, the effective air intake area of the active air intake grille of the present document is significantly increased as compared to the traditional active air intake grille under the condition of the same blade opening angle, and the heat dissipation efficiency is accordingly improved. By setting the multiple blades, the wind force is shared among the multiple blades under the condition of the same blade area, thereby improving the bearing capacity of the overall air intake unit and making it uneasy to damage. By connecting the multiple groups of blades to a link bracket, the opening and closing of the air intake unit is realized during the movement of the link bracket along the thickness direction of the link bracket, thereby ensuring the synchronization of the movement of each blade.

The present document sets a first link mechanism and a second link mechanism to transmit the force on the first link mechanism to the second link mechanism. The first link mechanism and the second link mechanism jointly drive the link bracket to move, ensuring the balance, synchronization and simultaneity of the link bracket during movement, thereby improving the angular synchronization and angular stability when the multiple blades rotate.

By providing the multiple blades, and a plurality of blades in a single air intake unit with different directions of rotation, the present document achieves a diversity of angles of wind transfer, and transfers the intake air to the various locations of the vehicle where heat dissipation is required.

The appearance surface of the active air intake grille of the present document is arc-shaped, which provides a larger available space in the vehicle. The space can be used to place bumpers of various types of structures, which leads to a wide range of applications, and a beautiful appearance of the active air intake grille of the present document.

The above description is only a specific embodiment of the present document, but is not to limit the protection scope of the present document. Any technician modifications or changes made by the person of ordinary skill in the art without departing from the spirit of the present document should be included by the protection scope of the present document. Therefore, the protection scope of the present document should be based on the protection scope of the claims.

## Claims

1. An active air intake grille, **characterized in that** comprising: a fixed bracket (1), a link bracket (2), a driving device (3), a first link mechanism (4) and at least one air intake unit (10);
the air intake unit (10) comprising a plurality of blades (6) and a plurality of blade link mechanisms (7);
the link bracket (2) being rotatably connected to a first end of each of the plurality of blade link mechanisms (7), and a second end of each of the plurality of blade link mechanisms (7) being rotatably connected to the first end of each of the plurality of blades (6) respectively, the second end of each of the plurality of blades (6) being rotatably connected to the fixed bracket (1);
a first end of the first link mechanism (4) being connected to the link bracket (2), and a second end of the first link mechanism (4) being connected to the driving device (3);
the driving device (3) driving the first link mechanism (4) to move, the first link mechanism (4) driving the link bracket (2) to move, the link bracket (2) driving the blade link mechanisms (7) to move, and the blade link mechanisms (7) driving the first ends of the blades (6) to rotate to open or close the air intake unit (10).

2. The active air intake grille according to claim 1, wherein the fixed bracket (1) is provided with a plurality of air intake unit mounting ports, and the air intake unit mounting ports correspond to the at least one air intake unit (10) respectively;
the shape of the air intake unit mounting port comprises at least one of a circular shape and a polygonal shape, and the plurality of blades (6) are arranged along a circumferential edge of the air intake unit mounting port.

3. The active air intake grille according to claim **1,** wherein the fixed bracket (1) is provided with a redundant blade mounting port (22), the redundant blade mounting port (22) is located between adjacent air intake unit mounting ports, and a blade (6) is provided in the redundant blade mounting port (22).

4. The active air intake grille according to claim **1,** further comprising a fixed bracket (1), a link bracket (2), a driving device (3), a first link mechanism (4) and at least one air intake unit (10);
the fixed bracket (1) is provided with a plurality of air intake unit mounting ports, and the air intake unit mounting ports correspond to the at least one air intake unit (10) respectively;
the air intake unit (10) comprises a plurality of blades (6) and a plurality of blade link mechanisms (7), the blade (6) is provided with a first end and a second end, and the second end of the blade (6) is rotatably connected to an edge of the air intake unit mounting port to realize a rotatable connection between the blade (6) and the fixed bracket (1), and the first end of each blade (6) is away from the edge of the air intake unit mounting port relative to its second end, and is rotatably connected to the blade link mechanism (7) respectively;
one end of each blade link mechanism (7) is rotatably connected to each blade (6), and the other end of each blade link mechanism (7) is rotatably connected to the link bracket (2);
the first link mechanism (4) is respectively connected to the link bracket (2) and the driving device (3) at different positions thereof, the first link mechanism (4) is configured to be driven by the driving device (3) and drive the link bracket (2) to move, so that the blade link mechanism (7) is driven by the link bracket (2), and the blade link mechanism (7) drives the blade (6) to rotate, and the blade (6) flips relative to the fixed bracket (1) to open or close the air intake unit (10).

5. The active air intake grille according to claim **4,** wherein the air intake unit (10) is configured as, when the air intake unit (10) is in an open state, a plurality of air intake channels are formed on the active air intake grille between the blades (6) of the same air intake unit (10); the air intake channels are configured as air is capable of passing through them and into the active air intake grille; when the air intake unit (10) is in a closed state, the air intake channels disappear;
the blades (6) in the same air intake unit (10) are configured as, the link bracket (2) moves in a direction away from the air intake unit mounting port, and the air intake channels are formed between the blades (6); after the formation of the air intake channels, the link bracket (2) is reset in a direction close to the air intake unit mounting port, and the air intake channels disappear.

6. The active air intake grille according to claim **4,** wherein the blade link mechanism (7) is rotatably connected to the blade (6) and is clamped with the blade (6), and the blade link mechanism (7) is rotatably connected to the link bracket (2) and is clamped with the link bracket (2).

7. The active air intake grille according to claim **6,** wherein the blade link mechanism (7) comprises a main body (71) and a first matching portion (72), the main body (71) is provided with a first base area (711), the first base area (711) and the first matching portion (72) are connected and the first matching portion (72) is arranged on the first base area (711), the first matching portion (72) comprises a first shaft portion (721) and a clamping group (722) which are arranged from a position close to toward a position far from the main body (71), the clamping group (722) comprises a first clamping portion (7221) and a second clamping portion (7222), the first clamping portion (7221) and the second clamping portion (7222) are arranged at intervals, the first clamping portion (7221) and the second clamping portion (7222) are both connected to the first shaft portion (721), and the first clamping portion (7221) and the second clamping portion (7222) are elastically deformable; the blade (6) is provided with a second matching portion (61), and the clamping group (722) is clasped with the second matching portion (61), the first shaft portion (721) is rotatably connected to the second matching portion (61), the second matching portion (61) is located between the clamping group (722) and the main body (71), the clamping group (722) and the first base area (711) are configured to cooperate with each other to restrict at least a part of the second matching portion (61) therebetween, thereby limiting the separation of the blade link mechanism (7) from the blade (6).

8. The active air intake grille according to claim **7,** further comprising a third matching portion (73), and the main body (71) is provided with a second base area (712), the second base area (712) and the third matching portion (73) are connected and the third matching portion (73) is provided on the second base area (712), the third matching portion (73) comprises a second shaft portion (731) and a third clamping portion (732) arranged at intervals, and the link bracket (2) is provided with a fourth matching portion, the second shaft portion (731) is rotatably connected to the fourth matching portion, and the third clamping portion (732) is clamped with the fourth matching portion.

9. The active air intake grille according to claim **7 or 8,** wherein the blade link mechanism (7) further comprises an elastic portion (74), the elastic portion (74) is connected to the main body (71) and abuts against the link bracket (2) to play a buffering role when the blade link mechanism (7) and the link bracket (2) move relative to each other; the elastic portion (74) is provided with at least one penetration area (741), and the penetration area (741) is used to facilitate the deformation of a peripheral portion of the elastic portion (74) that surrounds the penetration area (741).

10. The active air intake grille according to claim **9,** wherein the number of the penetration areas (741) is two or more, different penetration areas (741) are used to facilitate the deformation of different positions of the elastic portion (74), and the different positions of the elastic portion (74) are used to play a buffering role at different moments of movement of the blade link mechanism (7) and the link bracket (2).

11. The active air intake grille according to claim **1 or 4,** further comprising a second link mechanism (5), the first link mechanism (4) is located on a lower side of the link bracket (2) and is connected to the link bracket (2), and the second link mechanism (5) is connected to an upper end of the fixed bracket (1), a lower end of the fixed bracket (1), an upper end of the link bracket (2) and a lower end of the link bracket (2); the first link mechanism (4) is configured to be driven by the driving device (3) and drive the link bracket (2) to move forward or backward of the vehicle, so that the blade (6) flips relative to the fixed bracket (1) toward outside or inside of the vehicle to open or close the air intake unit (10).

12. The active air intake grille according to claim **11,** wherein the second link mechanism (5) comprises a first separate body (51) and a second separate body (52) rotatably connected with each other, one of the first separate body (51) and the second separate body (52) is rotatably connected to the fixed bracket (1), and the other of the first separate body (51) and the second separate body (52) is rotatably connected to the link bracket (2).

13. The active air intake grille according to claim **12,** wherein one of the first separate body (51) and the second separate body (52) is provided with a shaft portion (53), and the other of the first separate body (51) and the second separate body (52) is provided with a rotating connection portion (54), the rotating connection portion (54) is rotatably connected to the shaft portion (53).

14. The active air intake grille according to claim **13,** wherein the rotating connection portion (54) is a sleeve portion with a side opening integrally formed on one of the first separate body (51) and the second separate body (52), and the shaft portion (53) is a cylinder integrally formed on the other of the first separate body (51) and the second separate body (52).

15. The active air intake grille according to claim **12,** wherein the first separate body (51) and the second separate body (52) are both U-shaped, and the U-shaped first separate body (51) is rotatably connected to one of the link bracket (2) and the fixed bracket (1) at one end of its opening, and is rotatably connected to the other of the link bracket (2) and the fixed bracket (1) at the other end of its opening.

16. The active air intake grille according to claim **12,** wherein an operation logic of the driving device (3) comprises detecting a resistance it is subjected to; the second separate body (52) is provided with a force distribution part (55) protruding outward from the second separate body (52) relative to its peripheral portion, and the force distribution part (55) is arranged on a rotation trajectory of the first separate body (51), and the force distribution part (55) hinders the rotation of the first separate body (51) and is used to generate an interaction force with the first separate body (51); the force applied by the first separate body (51) to the force distribution part (55) is used to be transmitted to the driving device (3) as a part of the resistance.

17. A vehicle, comprising the active air intake grille as claimed in any one of claims **1-16.**
